# EUROPÄISCHE PATENTANMELDUNG

(11) **EP 2 608 113 A2**
(43) Veröffentlichungstag der Anmeldung: **26.06.2013**
(21) Anmeldenummer: 12008461.1
(22) Anmeldetag: 19.12.2012
(51) Int. Cl.: G06K 19/073, G08B 13/24

(54) **Tragbarer Datenträger**

(30) Priorität: 22.12.2011 DE 102011122030
(71) Anmelder: Giesecke & Devrient GmbH, 81677 München (DE)
(72) Erfinder: Rankl, Wolfgang, 81825 München (DE)

(57) **Zusammenfassung**

Die Erfindung betrifft einen tragbaren Datenträger, umfassend eine Trägerschicht (2) mit einer Hauptfläche, auf der eine elektronische Schaltung (501, 502; 5') aufgebracht ist, wobei in der Trägerschicht (2) ein entfernbarer Bereich (6) mit einem Rand (601) zum Rest der Trägerschicht (2) derart ausgebildet ist, dass der entfernbare Bereich (6) entlang des Rands (601) von dem Datenträger (1) durch einen Benutzer getrennt werden kann und hierdurch die elektronische Schaltung deaktiviert wird. Der tragbare Datenträger zeichnet sich dadurch aus, dass der Rand (601) zumindest abschnittweise durch eine Einkerbung gebildet ist, welche auf der der Hauptfläche gegenüberliegenden Fläche der Trägerschicht (2) vorgesehen ist oder welche auf der Hauptfläche vorgesehen und an Stellen unterbrochen ist, an denen sich Bestandteile der elektronischen Schaltung (501, 502; 5') befinden.

## Beschreibung

Die Erfindung betrifft einen tragbaren Datenträger sowie ein Verfahren zum Herstellen eines tragbaren Datenträgers.

Tragbare Datenträger werden heutzutage in einer Vielzahl von technischen Anwendungsgebieten eingesetzt. Zur Identifikation von Objekten kommen oftmals tragbare Datenträger in der Form von sogenannten RFID-Tags (RFID = Radio Frequency Identification) zum Einsatz. In einem solchen Datenträger ist ein Transponder integriert, in dem Informationen gespeichert sind, die kontaktlos über elektromagnetische Wellen ausgelesen werden können. RFID-Tags kommen zum Beispiel im Bereich der Warenlogistik und Warenkennzeichnung zum Einsatz. Die RFID-Tags stellen dabei Funketiketten dar, welche auf den jeweiligen Waren angebracht werden und eine kontaktlos auslesbare Identifikation der damit gezeichneten Waren enthalten. Hierdurch kann eine Ware auf einfache Weise in einer logistischen Kette über das RFID-Tag nachverfolgt und identifiziert werden.

Oftmals ist es wünschenswert, dass tragbare Datenträger durch einen Benutzer deaktiviert werden können. Insbesondere bei Datenträgern in der Form von RFID-Tags besteht das Bedürfnis, dass eine Ware mit darauf angebrachtem RFID-Tag nach dem Erwerb durch einen Käufer nicht heimlich über das Tag verfolgt werden kann.

In der Druckschrift US 2006/0061475 A1 ist die Deaktivierung eines RFID-Tags über eine Perforation auf dem Tag beschrieben, wobei die Verbindung zwischen einem RFID-Chip und dessen Antenne durch Abreißen der Perforation unterbrochen wird.

In dem Dokument EP 0 52 512 B1 wird unter anderem die Deaktivierung einer an einem Lieferschein angebrachten elektronischen Schaltung beschrieben. Dabei kann die elektronische Schaltung zum Beispiel durch Abreißen einer Auslieferungskopie am Lieferschein unterbrochen werden.

Aufgabe der Erfindung ist es, in einem tragbaren Datenträger ein Mittel zu seiner Deaktivierung vorzusehen, welches zum einen die Funktionalität des tragbaren Datenträgers im aktiven Zustand nicht beeinträchtigt und zum andern eine einfache und zuverlässige Deaktivierung des Datenträgers durch einen Benutzer ermöglicht.

Diese Aufgabe wird durch den tragbaren Datenträger gemäß Patentanspruch 1 bzw. ein Verfahren zum Herstellen eines tragbaren Datenträgers gemäß Patentanspruch 12 gelöst. Weiterbildungen der Erfindungen sind in den abhängigen Ansprüchen definiert.

Der erfindungsgemäße tragbare Datenträger umfasst eine Trägerschicht mit einer Hauptfläche, auf der eine elektronische Schaltung aufgebracht ist. In der Trägerschicht ist dabei ein entfernbarer Bereich mit einem Rand zum Rest der Trägerschicht derart ausgebildet, dass der entfernbare Bereich entlang des Randes von dem Datenträger durch einen Benutzer getrennt werden kann und hierdurch die elektronische Schaltung deaktiviert wird.

Der erfindungsgemäße Datenträger zeichnet sich dadurch aus, dass der Rand zumindest abschnittsweise durch eine Einkerbung gebildet ist, welche auf der der Hauptfläche gegenüberliegenden Fläche der Trägerschicht vorgesehen ist oder welche auf der Hauptfläche vorgesehen und an Stellen unterbrochen ist, an denen sich Bestandteile der elektronischen Schaltung befindet. Auf diese Weise wird ein entfernbarer Bereich nach Art einer Lasche gebildet, der bei bestimmungsgemäßer Verwendung durch einen Benutzer mittels Kraftausübung vom Rest des Datenträgers getrennt werden kann. Durch die entsprechende Anbringung einer Einkerbung auf der Rückseite der Hauptfläche bzw. nur in Bereichen, in denen sich keine Bauelemente oder Leitungen befinden, wird sichergestellt, dass es zu keiner nachteiligen Wechselwirkung zwischen der elektronischen Schaltung und der Einkerbung kommt, insbesondere im Rahmen der Herstellung des tragbaren Datenträgers. Wird die elektronische Schaltung zum Beispiel auf dem tragbaren Datenträger aufgedruckt, ist durch die erfindungsgemäße Einkerbung sichergestellt, dass der Aufdruck auf einer planen Fläche erfolgt und sich Bestandteile der Schaltung nicht über unebene Bereiche der Einkerbung erstrecken.

In einer besonders bevorzugten Ausführungsform des tragbaren Datenträgers ist die Einkerbung in der Trägerschicht eingestanzt. Dabei ist sichergestellt, dass die Stanzung nicht zur Durchstoßung der Trägerschicht führt. Gemäß dieser Variante kann die entsprechende Lasche auf einfache Weise mit herkömmlichen Stanzwerkzeugen realisiert werden.

In einer weiteren bevorzugten Ausführung des erfindungsgemäßen Datenträgers endet ein Teil des entfernbaren Bereichs an einer Kante der Trägerschicht oder steht über die Kante der Trägerschicht hervor. Hierdurch wird das Trennen der Lasche von dem tragbaren Datenträger erleichtert, da der Benutzer zum Entfernen der Lasche diese an der Kante des Datenträgers bzw. an einem Griffstück ergreifen kann.

In einer weiteren bevorzugten Ausführungsform des tragbaren Datenträgers ist auf der Hauptfläche der Trägerschicht eine Deckschicht zum Schutz des Datenträgers angeordnet. In diese Deckschicht ist dabei in Überdeckung mit dem entfernbaren Bereich der Trägerschicht ein weiterer entfernbarer Bereich mit einem weiteren Rand derart ausgebildet, dass der weitere Bereich entlang des weiteren Rands zusammen mit dem entfernbaren Bereich in der Trägerschicht von dem tragbaren Datenträger durch einen Benutzer getrennt werden kann. Vorzugsweise ist der weitere Rand analog zur Trägerschicht wiederum zumindest abschnittsweise als Einkerbung realisiert. Die Einkerbung kann dabei auf der Oberseite oder Unterseite der Deckschicht angebracht sein. Sofern die Deckschicht keine elektronischen Bauteile aufweist, muss auch nicht sichergestellt werden, dass die Einkerbung an solchen Stellen unterbrochen wird, an denen Bestandteile der elektronischen Schaltung vorhanden sind.

In einer weiteren Ausgestaltung des erfindungsgemäßen Datenträgers ist auf der der Hauptfläche gegenüberliegenden Fläche der Trägerschicht ferner eine Visualisierungsschicht ohne entfernbaren Bereich vorgesehen, welche im Gebiet des entfernbaren Bereichs der Trägerschicht freigelegt wird, wenn der entfernbare Bereich entlang des Rands der Trägerschicht von dem Datenträger durch einen Benutzer getrennt wird. Auf diese Weise wird sichergestellt, dass durch einen Benutzer einfach erkannt werden kann, wenn der Datenträger deaktiviert ist. Vorzugsweise ist in dem Bereich der Visualisierungsschicht, der beim Trennen des entfernbaren Bereichs freigelegt wird, ein Muster und/oder ein textueller Hinweis aufgebracht. Durch eine auffällige Gestaltung des Musters, insbesondere durch eine farbige Gestaltung, bzw. durch einen verständlichen Hinweis auf die Deaktivierung (z.B. durch die Textpassage "RFID deaktiviert") wird dem Benutzer einfach und intuitiv vermittelt, dass der tragbare Datenträger außer Betrieb gesetzt wurde.

In einer weiteren Ausführung der Erfindung umfasst die elektronische Schaltung des Datenträgers eine RFID-Schaltung (z.B. in der Form eines Chips) mit damit verbundener Antenne. In einer bevorzugten Variante dieser Ausführungsform befindet sich die RFID-Schaltung auf dem entfernbaren Bereich der Trägerschicht und die Antenne außerhalb des entfernbaren Bereichs der Trägerschicht. In einer Abwandlung können sich auch die Antenne auf dem entfernbaren Bereich der Trägerschicht und der RFID-Schaltung außerhalb des entfernbaren Bereichs der Trägerschicht befinden. In beiden Varianten kreuzt dabei die elektrische Verbindung zwischen RFID-Schaltung und Antenne den Rand des entfernbaren Bereichs. An solchen Kreuzungspunkten ist dabei auch keine Einkerbung vorgesehen, sofern diese auf der Hauptfläche der Trägerschicht angebracht ist. Nichtsdestotrotz wird beim Abreißen der Lasche eine Durchtrennung dieser Kreuzungspunkte erreicht. Es muss dabei lediglich sichergestellt werden, dass die Unterbrechung der Einkerbung ein bestimmtes Maß nicht überschreitet.

In einer weiteren Ausgestaltung des tragbaren Datenträgers ist die elektronische Schaltung auf der Trägerschicht zumindest teilweise eine gedruckte elektronische Schaltung. Gedruckte elektronische Schaltungen sind dabei an sich aus dem Stand der Technik bekannt und ermöglichen unter Verwendung von herkömmlichen Drucktechniken eine sehr kompakte Ausbildung von elektronischen Bauteilen.

Der erfindungsgemäße tragbare Datenträger kann in verschiedenen Anwendungsgebieten eingesetzt werden. Vorzugsweise wird der tragbare Datenträger an einer Verpackungseinheit für Güter, insbesondere für Lebensmittel, angebracht. Die Erfindung umfasst somit auch eine Verpackungseinheit mit dem daran angebrachten tragbaren Datenträger. Der tragbare Datenträger ist zur Vorbeugung von Vandalismusschäden vorzugsweise im Inneren der Verpackungseinheit vorgesehen. In einer bevorzugten Ausführungsform ist an der Verpackungseinheit ferner ein Siegel vorgesehen, welches beim Öffnen der Verpackungseinheit gebrochen wird. Dieses Siegel ist derart mit dem tragbaren Datenträger verbunden, dass beim Brechen des Siegels der entfernbare Bereich der Trägerschicht von dem tragbaren Datenträger getrennt wird. Gegebenenfalls kann das Siegel auch zumindest teilweise Bestandteil des tragbaren Datenträgers sein, zum Beispiel kann das Siegel den entfernbaren Bereich des tragbaren Datenträgers bilden.

Neben dem oben beschriebenen tragbaren Datenträger betrifft die Erfindung ferner ein Verfahren zur Herstellung dieses Datenträgers. Dabei wird auf einer Hauptfläche einer Trägerschicht eine elektronische Schaltung aufgebracht und in der Trägerschicht ein entfernbarer Bereich mit einem Rand zum Rest der Trägerschicht derart ausgebildet, dass der entfernbare Bereich entlang des Rands von dem Datenträger durch einen Benutzer getrennt werden kann und hierdurch die elektronische Schaltung deaktiviert wird. Im Rahmen dieses Herstellungsverfahrens wird der Rand zumindest abschnittsweise durch eine Einkerbung gebildet, welche auf der der Hauptfläche gegenüberliegenden Fläche der Trägerschicht vorgesehen wird oder welche auf der Hauptfläche vorgesehen und an Stellen unterbrochen wird, an denen sich Bestandteile der elektronischen Schaltung befinden.

Ausführungsbeispiele der Erfindung werden nachfolgend anhand der beigefügten Figuren detailliert beschrieben.

Es zeigen:
- Fig. 1: eine Schnittansicht durch eine erste Ausführungsform eines erfindungsgemäßen tragbaren Datenträgers;
- Fig. 2: eine Draufsicht auf die Trägerschicht des tragbaren Datenträgers der ersten Ausführungsform;
- Fig. 3: eine Draufsicht auf die Deckschicht des tragbaren Datenträgers der ersten Ausführungsform;
- Fig. 4: eine Draufsicht auf die Trägerschicht des tragbaren Datenträgers der ersten Ausführungsform, wobei der entfernbare Bereich vom Datenträger getrennt ist;
- Fig. 5: eine Ansicht analog zu Fig. 4 mit einer abgewandelten Ausgestaltung der unter der Trägerschicht angeordneten Visualisierungsschicht;
- Fig. 6: eine Draufsicht auf die Trägerschicht eines tragbaren Datenträgers gemäß einer zweiten Ausführungsform der Erfindung;
- Fig. 7: eine Draufsicht auf die Trägerschicht eines tragbaren Datenträgers gemäß einer dritten Ausführungsform der Erfindung;
- Fig. 8: eine Draufsicht auf die Trägerschicht des Datenträgers der Fig. 7, wobei der entfernbare Bereich von dem Datenträger getrennt ist; und
- Fig. 9: eine Draufsicht auf die Trägerschicht eines tragbaren Datenträgers gemäß einer vierten Ausführungsform der Erfindung.

Nachfolgend werden Ausführungsformen der Erfindung basierend auf einem tragbaren Datenträger in der Form eines Funketiketts beschrieben, das eine an sich bekannte RFID-Schaltung mit entsprechender Antenne umfasst. Vorzugsweise wird das Etikett auf einer Verpackung eines Guts, wie z.B. eines Lebensmittels, angebracht, wobei Informationen zu dem Gut in der RFID-Schaltung gespeichert sind. Diese Informationen können kontaktlos über ein geeignetes Lesegerät ausgelesen werden. Der Einsatz des Etiketts liegt insbesondere im Bereich der Warenlogistik und Warenkennzeichnung, um den Transportweg einer Ware zu verfolgen bzw. die Ware kontaktlos zu identifizieren. Es ist dabei wünschenswert, dass der Käufer der Ware die Möglichkeit hat, auf einfache Weise das Funketikett irreversibel zu deaktivieren, so dass sichergestellt ist, dass die gekaufte Ware nicht heimlich ohne Zustimmung des Käufers aufgrund des Etiketts verfolgt werden kann.

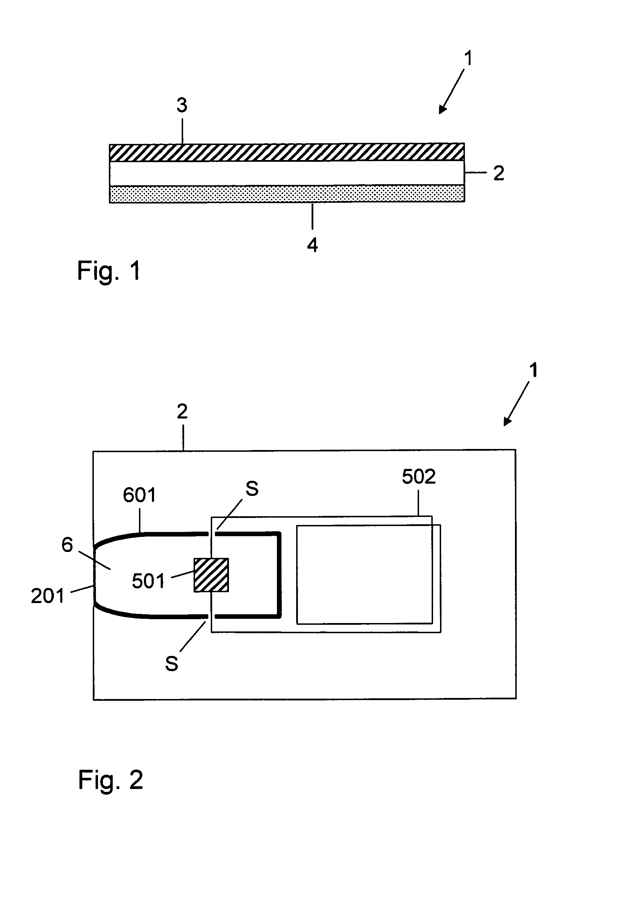

Fig. 1 zeigt eine Schnittansicht einer ersten Ausführungsform eines erfindungsgemäßen tragbaren Datenträgers. Der Datenträger umfasst eine Trägerschicht 2, auf der sich die entsprechende RFID-Schaltung befindet und welche auf der Oberseite zum Schutz durch eine Deckschicht 3 abgedeckt ist. Die Trägerschicht kann dabei zum Beispiel als Trägerfolie aus geeignetem Kunststoff ausgebildet sein. Ferner ist auf der Unterseite eine Visualisierungsschicht 4 vorgesehen, welche optional ist und es ermöglicht, auf einfache Weise festzustellen, wenn der tragbare Datenträger deaktiviert wurde, wie weiter unten noch näher erläutert wird.

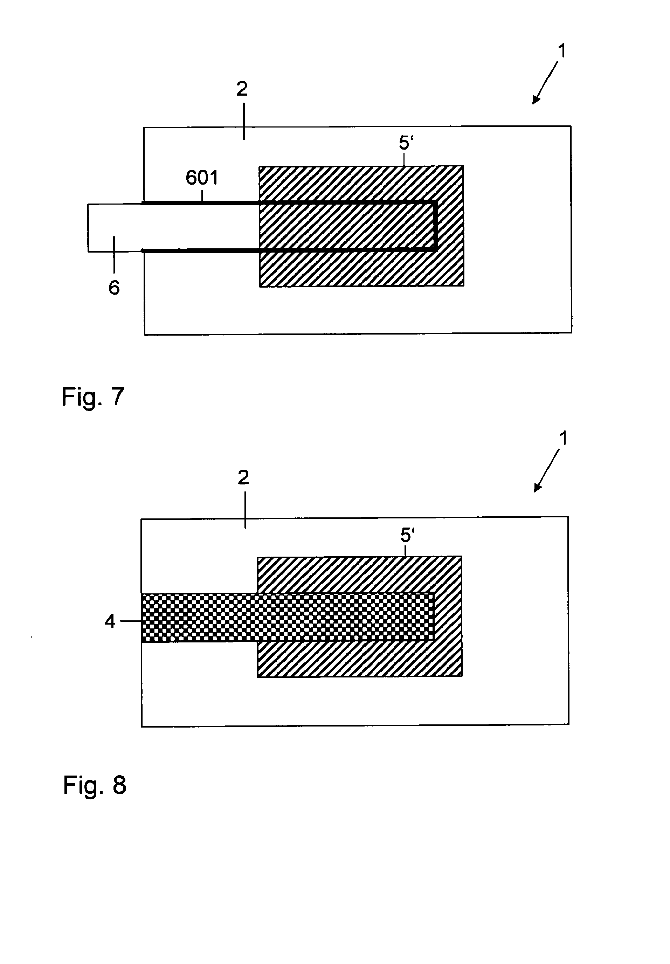

Fig. 2 zeigt eine Draufsicht auf die Trägerschicht 2 des tragbaren Datenträgers der Fig.1. Man erkennt, dass auf der Trägerschicht 2 eine elektronische Schaltung in der Form eines RFID-Chips 501 mit damit verbundener Antenne 502 vorgesehen ist. In der Ausführungsform der Fig. 2 sind der Chip 501 und die Antenne 502 elektronische Bauelemente, welche auf die Trägerfolie aufgesetzt werden. Gegebenenfalls können diese Bauteile auch als gedruckte elektronische Schaltung realisiert werden, die auf die Trägerschicht aufgedruckt wird. Ausführungsformen mit gedruckter elektronischer Schaltung werden weiter unten mit Bezug auf Fig. 7 bis Fig. 9 beschrieben.

In der Trägerschicht 2 ist ferner ein separater Bereich 6 mit einem Rand 601 ausgebildet. Dieser Bereich 6 endet an seinem linken Ende an der Kante 201 der Trägerschicht und bildet eine abreißbare Lasche, welche durch einen Benutzer über eine Zugbewegung nach oben entfernt werden kann. Die Lasche kann dabei gegebenenfalls auch über die Kante 201 hervorstehen, so dass hierdurch ein geeigneter Griffabschnitt gebildet wird, an dem vom Benutzer zum Abreißen der Lasche gezogen werden kann. Hierdurch wird das Entfernen der Lasche vereinfacht.

Auf der Lasche 6 ist der RFID-Chip 501 vorgesehen, und beim Entfernen der Lasche werden die elektrischen Verbindungen des Chips 501 zur Antenne 502 getrennt, so dass die Funktionalität des tragbaren Datenträgers als RFID-Tag irreversibel deaktiviert wird. Um das Abreißen der Lasche zu ermöglichen, ist der Rand 601 in der Ausführung der Fig. 2 als Einkerbung auf der Oberseite der Trägerschicht 2 ausgebildet. Diese Einkerbung wird in einer bevorzugten Variante in die Trägerschicht eingestanzt. Um zu vermeiden, dass die Funktionalität der elektronischen Schaltung durch die Einkerbung beeinträchtigt wird, ist die Einkerbung an solchen Stellen unterbrochen, an denen sich elektronische Bauelemente befinden. Gemäß Fig. 2 liegen solche Unterbrechungen an den beiden Stellen S vor, an denen sich die elektrische Verbindungsleitung zwischen dem RFID-Chip 501 und der Antenne 502 mit dem Rand 601 kreuzt.

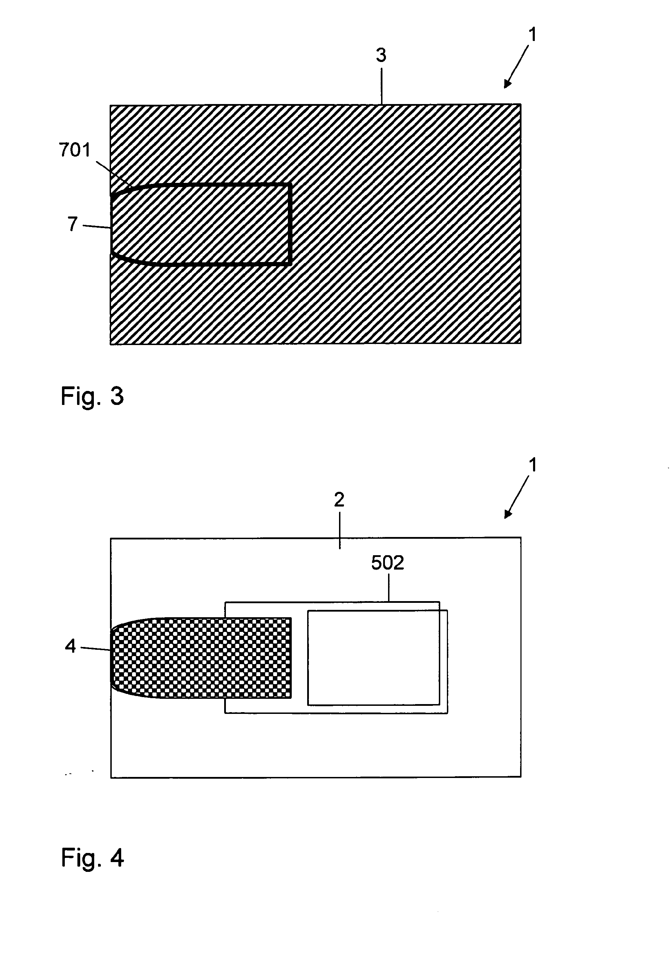

Durch die Einkerbung 601 wird eine Abrisskante der Lasche 6 gebildet, so dass Zugkräfte an der Lasche zu einem sicheren und geradlinigen Heraustrennen der gesamten Lasche mit dem darauf befindlichen Chip aus dem Trägermaterial führen. Dabei werden auch die Stellen S ohne Einkerbung durchtrennt, so dass die Verbindung zwischen dem Chip in der Antenne irreversibel unterbrochen wird. Da auf dem tragbaren Datenträger ferner eine Deckschicht 3 vorgesehen ist, befindet sich in Überdeckung mit dem Rand 601 auch in der Deckschicht eine entsprechende Einkerbung. Dies ist in Fig. 3 verdeutlicht, welche eine Draufsicht auf die Deckschicht 3 zeigt, wobei sich an der gleichen Stelle wie in der Trägerschicht 2 eine Einkerbung 701 befindet, durch welche ein abtrennbarer Bereich 7 gebildet wird. Dabei ist es nicht erforderlich, dass die Einkerbung unterbrochen wird, denn auf der Deckschicht befinden sich keine elektronischen Bauteile. In Analogie zur Einkerbung 601 kann die Einkerbung 701 wiederum auf der Oberseite oder der Unterseite der Deckschicht über eine geeignete Stanzung ausgebildet werden. Beim Abreißen der Lasche 6 wird somit auch der Bereich 7 aus der Deckschicht 3 entfernt.

In einer Abwandlung der Ausführungsform der Fig. 2 kann die Einkerbung 601 gegebenenfalls auch auf der Unterseite der Trägerschicht 2 ausgebildet sein, wobei in diesem Fall in der Regel nicht darauf geachtet werden muss, dass die Einkerbung an Stellen unterbrochen wird, an denen sich elektronische Bauteile der Schaltung befinden. Nichtsdestotrotz kann die Einkerbung an solchen Stellen dennoch unterbrochen sein, insbesondere wenn die Einkerbung eine Tiefe aufweist, die ggf. zu einer Beeinträchtigung der Funktionsweise der elektronischen Bauteile auf der Oberseite der Trägerschicht führen kann.

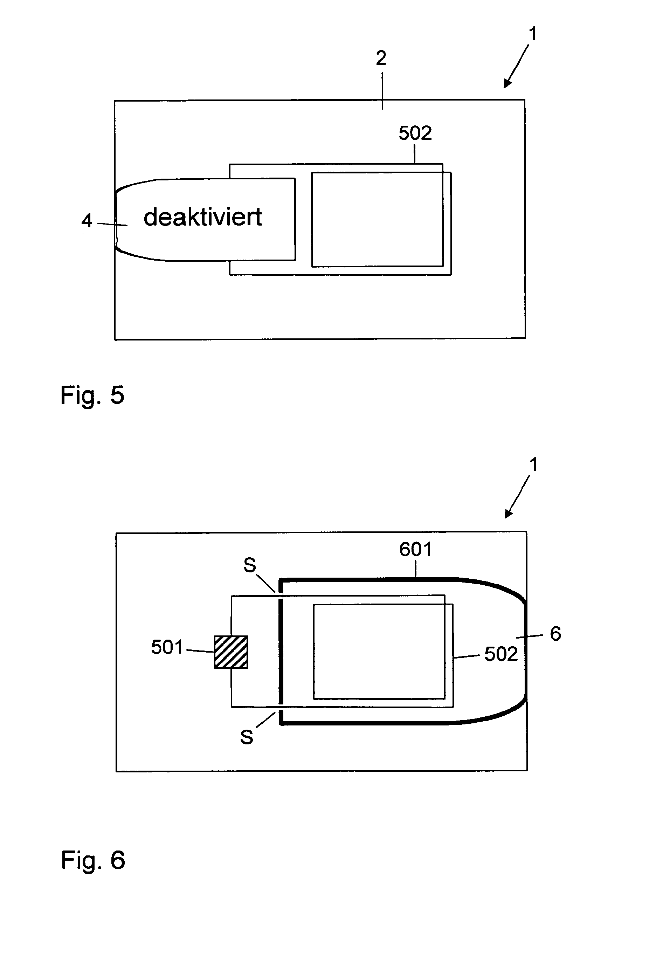

Fig. 4 zeigt eine Draufsicht auf die Trägerschicht 2 analog zu Fig. 2, wobei nunmehr die Lasche 6 durch den Benutzer vom tragbaren Datenträger entfernt wurde. Man erkennt, dass nach dem Entfernen der Lasche 6 die Oberseite der Visualisierungsschicht 4 freigelegt ist. In der Ausführungsform der Fig. 4 befindet sich dabei auf der Oberseite ein auffälliges Muster in der Form von Kacheln, wobei dieses Muster gegebenenfalls auch farbig ausgestaltet sein kann. Auf diese Weise wird visuell gut wahrnehmbar vermittelt, dass der Datenträger durch Abreißen der Lasche deaktiviert wurde. Fig. 5 zeigt eine Abwandlung der Ausführungsform der Fig. 4. Im Unterschied zu Fig. 4 ist auf der Oberseite der Visualisierungsschicht 4 anstatt eines Musters ein textueller Hinweis in der Form des Worts "deaktiviert" wiedergegeben, wodurch ebenfalls vermittelt wird, dass die Lasche von dem tragbaren Datenträger entfernt wurde und dieser deaktiviert ist.

Fig. 6 zeigt eine zweite Ausführungsform des erfindungsgemäßen tragbaren Datenträgers, wobei analog zu Fig. 2 wiederum die Trägerschicht 2 des Datenträgers wiedergegeben ist. Es ist dabei in gleicher Weise wie in Fig. 2 ein RFID-Chip 501 mit damit verbundener Antenne 502 auf dem Datenträger ausgebildet. Im Unterschied zu Fig. 2 befindet sich die Lasche 6 nunmehr an einer anderen Stelle der Trägerschicht 2. Nichtsdestotrotz wird die Lasche in gleicher Weise wie in Fig. 2 durch eine Einkerbung 601 auf der Oberseite der Trägerschicht gebildet. Die Lasche der Fig. 6 beinhaltet nunmehr die Antenne 502, so dass beim Abreißen der Lasche nicht der RFID-Chip, sondern die Antenne entfernt wird. Das Entfernen der Lasche führt wiederum zu einer Unterbrechung der elektrischen Verbindung zwischen dem RFID-Chip 501 und der Antenne 502 an den Stellen S, an denen die Einkerbung unterbrochen ist. Die Ausführungsform der Fig. 6 hat den Vorteil, dass die Lasche im Vergleich zu Fig. 2 nunmehr deutlich größer ausgelegt werden kann, was das Ergreifen und das Abreißen der Lasche durch den Benutzer erleichtert.

Der Datenträger gemäß Fig. 6 umfasst in Analogie zu der vorangegangenen Ausführungsform wiederum eine Deckschicht 3 sowie eine Visualisierungsschicht 4. Diese sind entsprechend der ersten Ausführungsform geeignet ausgestaltet. Das heißt, auf der Deckschicht ist in Überdeckung mit der Lasche 6 eine Einkerbung vorgesehen, so dass beim Abreißen der Lasche auch der entsprechende Teil der Deckschicht abgerissen wird. Ferner kann eine Visualisierungsschicht mit einem auffälligen Muster bzw. einem textuellen Hinweis vorgesehen sein, wobei das Muster bzw. der textuelle Hinweis durch das Abreißen der Lasche freigelegt werden.

Fig. 7 und Fig. 8 zeigen eine dritte Ausführungsform eines erfindungsgemäßen Funketiketts. Im Unterschied zu den vorangegangenen Ausführungsformen ist die RFID-Schaltung nunmehr als gedruckte elektronische Schaltung ausgebildet. Gedruckte elektronische Schaltungen sind an sich bekannt und zeichnen sich dadurch aus, dass die elektronischen Bauelemente, Baugruppen und Anwendungen vollständig oder teilweise mit Druckverfahren hergestellt werden, wobei anstelle von Druckfarben elektronische Funktionsmaterialien in flüssiger oder pasteuser Form verwendet werden.

In Fig. 7 ist die Trägerschicht 2 eines tragbaren Datenträgers mit darauf aufgebrachter gedruckter elektronischer Schaltung gezeigt. Die gedruckte Schaltung ist lediglich schematisch durch einen schraffierten Bereich 5' angedeutet. In Analogie zu den vorangegangenen Ausführungsformen bildet die elektronische Schaltung eine RFID-Schaltung. In der Trägerschicht 2 ist in Übereinstimmung mit den vorangegangenen Ausführungsformen eine Einkerbung 601 vorgesehen, welche nunmehr auf der Unterseite der Trägerschicht angebracht ist, um hierdurch die elektronischen Bauteile auf der Oberseite nicht zu beeinträchtigen bzw. zu unterbrechen. Durch die Einkerbung 601 wird wiederum eine Lasche 6 gebildet, welche sich in der Ausführungsform der Fig. 7 über den linken Rand der Trägerschicht 2 hinaus erstreckt, wodurch ein Griffbereich gebildet wird, um das Abreißen der Lasche zu erleichtern. Der Datenträger umfasst auch eine Deckschicht und eine Visulisierungsschicht, welche aus Fig. 7 nicht ersichtlich sind, jedoch in gleicher Weise wie in den vorangegangenen Ausführungsbeispielen ausgestaltet sind.

Fig. 8 zeigt den tragbaren Datenträger der Fig. 7 nach Abreißen der Lasche. Man erkennt, dass hierdurch die Visualisierungsschicht 4 freigelegt wird, welche in der Ausführungsform der Fig. 8 als auffälliges Muster ausgestaltet ist, jedoch gegebenenfalls auch einen entsprechenden Schriftzug, wie den oben beschriebenen Schriftzug "deaktiviert", enthalten kann. Hierdurch kann zuverlässig die Deaktivierung des tragbaren Datenträgers durch einen Benutzer erkannt werden.

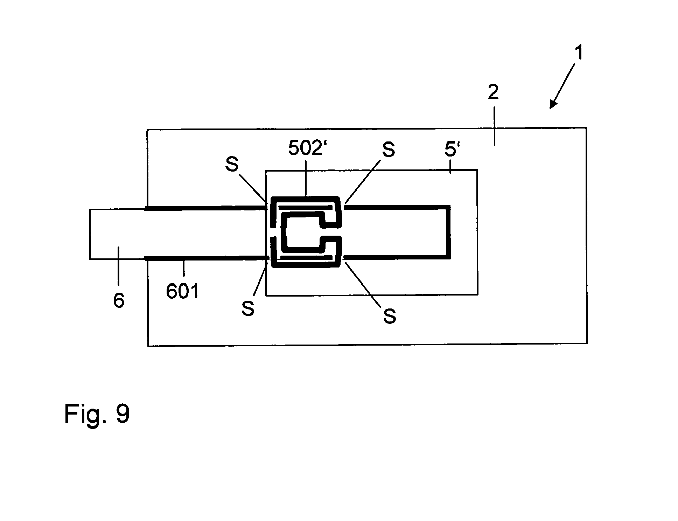

Fig. 9 zeigt eine Abwandlung der Ausführungsformen der Fig. 7 und Fig. 8. Es ist wiederum eine Schaltung in der Form einer gedruckten Elektronik 5' auf der Oberseite der Trägerschicht 2 vorgesehen. Dabei ist zur Verdeutlichung als elektronisches Bauteil eine aufgedruckte RFID-Antenne 501' dargestellt. Analog zu der Ausführungsform der Fig. 7 verläuft in der Trägerschicht eine Einkerbung 601, durch welche eine Lasche 6 mit vorstehendem Griffbereich gebildet wird. Die Einkerbung ist nunmehr jedoch auf der Oberseite der Trägerschicht 2 vorgesehen. Dabei wird die Einkerbung an entsprechenden Stellen unterbrochen, an denen sich elektronische Bauteile der gedruckten Schaltung befinden.

In Fig. 9 sind die entsprechenden Unterbrechungen für die RFID-Antenne 501' wiedergegeben, wobei weitere Unterbrechungen für zusätzlich vorhandenen Bauteile vorgesehen sein können. Man erkennt, dass an den entsprechenden Stellen S, an denen die Antennenspule den Rand der Lasche kreuzt, keine Einkerbung ausgebildet ist. Beim Abreißen der Lasche 6 entlang der Einkerbung werden auch die entsprechenden Unterbrechungen S durchrissen und hierdurch ein Teil der Antenne von dem Rest der gedruckten Schaltung getrennt, was zu einer Deaktivierung der RFID-Schaltung führt.

Wie bereits oben erwähnt, kann das Funketikett gemäß den vorangegangenen Ausführungsformen an einer Umverpackung eines Produkts angebracht werden. Vorzugsweise wird das Etikett dabei innerhalb der Umverpackung positioniert, um es hierdurch gegen Vandalismus zu schützen. Der tragbare Datenträger kann gegebenenfalls auf einem Siegel aus Kunststoff angebracht sein, welches insbesondere bei der Verpackung von Gütern im Lebensmittelbereich eingesetzt wird und beim Öffnen der Verpackung gebrochen wird. Das Siegel kann dabei einen Teil der Trägerschicht bilden, welche mit der entsprechenden elektronischen Schaltung überdruckt wird. Das Brechen des Siegels beim Öffnen der Verpackung führt gleichzeitig zum Abreißen der Lasche des tragbaren Datenträgers, so dass dieser deaktiviert wird.

Die im Vorangegangenen beschriebenen Ausführungsformen der Erfindung weisen eine Reihe von Vorteilen auf. Insbesondere wird es auf einfache Weise ermöglicht, eine in einem tragbaren Datenträger vorgesehene elektronische Schaltung irreversibel ohne weitere technische Hilfsmittel zu deaktivieren. Dabei wird durch die Anbringung einer Lasche mittels einer Einkerbung auf der Unterseite der Trägerschicht bzw. mit entsprechenden Unterbrechungen auf der Oberseite sichergestellt, dass die Funktionalität der elektronischen Schaltung nicht gestört ist. In einer bevorzugten Ausführungsform kann ferner die Deaktivierung des tragbaren Datenträgers visuell ohne Hilfsmittel über das Freilegen einer Visualisierungsschicht erkannt werden. Der erfindungsgemäße tragbare Datenträger lässt sich zudem sehr kostengünstig und für große Stückzahlen herstellen. Er ist in seiner Anwendung äußerst zuverlässig. Die Deaktivierung des Datenträgers ist dabei irreversibel und kann selbst mit hohem technischem Aufwand nicht mehr rückgängig gemacht werden. Weiterhin kann die Anbringung einer Lasche in heutigen Produktionsverfahren für tragbare Datenträger bzw. Funketiketten ohne aufwändige Änderungen umgesetzt werden.

## Patentansprüche

1. Tragbarer Datenträger, umfassend eine Trägerschicht (2) mit einer Hauptfläche, auf der eine elektronische Schaltung (501, 502; 5') aufgebracht ist, wobei in der Trägerschicht (2) ein entfernbarer Bereich (6) mit einem Rand (601) zum Rest der Trägerschicht (2) derart ausgebildet ist, dass der entfernbare Bereich (6) entlang des Rands (601) von dem Datenträger (1) durch einen Benutzer getrennt werden kann und hierdurch die elektronische Schaltung deaktiviert wird,
**dadurch gekennzeichnet, dass**
der Rand (601) zumindest abschnittweise durch eine Einkerbung gebildet ist, welche auf der der Hauptfläche gegenüberliegenden Fläche der Trägerschicht (2) vorgesehen ist oder welche auf der Hauptfläche vorgesehen und an Stellen unterbrochen ist, an denen sich Bestandteile der elektronischen Schaltung (501, 502; 5') befinden.

2. Tragbarer Datenträger nach Anspruch 1, **dadurch gekennzeichnet, dass** die Einkerbung in der Trägerschicht (2) eingestanzt ist.

3. Tragbarer Datenträger nach Anspruch 1 oder 2, **dadurch gekennzeichnet, dass** ein Teil des entfernbaren Bereichs (6) an einer Kante (201) der Trägerschicht (2) endet oder über eine Kante (201) der Trägerschicht (2) hervorsteht.

4. Tragbarer Datenträger nach einem der vorhergehenden Ansprüche, **dadurch gekennzeichnet, dass** auf der Hauptfläche der Trägerschicht (2) eine Deckschicht (3) angeordnet ist, in der in Überdeckung mit dem entfernbaren Bereich (6) der Trägerschicht (2) ein weiterer entfernbarer Bereich (7) mit einem weiteren Rand (701) derart ausgebildet ist, dass der weitere Bereich (7) entlang des weiteren Rands (701) zusammen mit dem entfernbaren Bereich (6) in der Trägerschicht (2) von dem Datenträger (1) durch einen Benutzer getrennt werden kann, wobei der weitere Rand (701) vorzugweise zumindest abschnittsweise durch eine Einkerbung in der Deckschicht (3) gebildet ist.

5. Tragbarer Datenträger nach einem der vorhergehenden Ansprüche, **dadurch gekennzeichnet, dass** auf der der Hauptfläche gegenüberliegenden Fläche der Trägerschicht (2) eine Visualisierungsschicht (4) ohne entfernbaren Bereich vorgesehen ist, welche im Gebiet des entfernbaren Bereichs (6) der Trägerschicht (2) freigelegt wird, wenn der entfernbare Bereich (6) entlang des Rands (601) der Trägerschicht (2) von dem Datenträger (1) durch einen Benutzer getrennt wird.

6. Tragbarer Datenträger nach Anspruch 5, **dadurch gekennzeichnet, dass** in dem Bereich der Visualisierungsschicht (4), der beim Trennen des entfernbaren Bereichs (6) freigelegt wird, ein Muster und/ oder ein textueller Hinweis aufgebracht ist.

7. Tragbarer Datenträger nach einem der vorhergehenden Ansprüche, **dadurch gekennzeichnet, dass** die elektronische Schaltung eine RFID-Schaltung (501) mit damit verbundener Antenne (502, 502') umfasst, wobei vorzugsweise die RFID-Schaltung (501) auf dem entfernbaren Bereich (6) der Trägerschicht (2) und die Antenne (502) außerhalb des entfernbaren Bereichs (6) der Trägerschicht (2) angeordnet sind oder umgekehrt, wobei die Verbindung zwischen RFID-Schaltung (501) und Antenne (502, 502') den Rand (601) des entfernbaren Bereichs (6) kreuzt.

8. Tragbarer Datenträger nach einem der vorhergehenden Ansprüche, **dadurch gekennzeichnet, dass** die elektronische Schaltung (501, 502, 5') zumindest teilweise eine gedruckte elektronische Schaltung (5') ist.

9. Verpackungseinheit, insbesondere zur Verpackung von Lebensmitteln, **dadurch gekennzeichnet, dass** an der Verpackungseinheit ein tragbarer Datenträger (1) nach einem der vorhergehenden Ansprüche angebracht ist.

10. Verpackungseinheit nach Anspruch 9, **dadurch gekennzeichnet, dass** der tragbare Datenträger (1) im Inneren der Verpackungseinheit angebracht ist.

11. Verpackungseinheit nach Anspruch 9 oder 10, **dadurch gekennzeichnet, dass** an der Verpackungseinheit ein Siegel vorgesehen ist, welches beim Öffnen der Verpackungseinheit gebrochen wird, wobei das Siegel derart mit dem tragbaren Datenträger (1) verbunden ist, dass beim Brechen des Siegels der entfernbare Bereich (6) der Trägerschicht (2) von dem tragbaren Datenträger (1) getrennt wird.

12. Verfahren zur Herstellung eines tragbaren Datenträgers (1) nach einem der Ansprüche 1 bis 8, **dadurch gekennzeichnet, dass** auf einer Hauptfläche einer Trägerschicht (2) eine elektronische Schaltung (501, 502; 5') aufgebracht wird und in der Trägerschicht (2) ein entfernbarer Bereich (6) mit einem Rand (601) zum Rest der Trägerschicht (2) derart ausgebildet wird, dass der entfernbare Bereich (6) entlang des Rands (601) von dem Datenträger (1) durch einen Benutzer getrennt werden kann und hierdurch die elektronische Schaltung deaktiviert wird, wobei der Rand (601) zumindest abschnittweise durch eine Einkerbung gebildet wird, welche auf der der Hauptfläche gegenüberliegenden Fläche der Trägerschicht (2) vorgesehen wird oder welche auf der Hauptfläche vorgesehen und an Stellen unterbrochen wird, an denen sich Bestandteile der elektronischen Schaltung (501, 502; 5') befinden.
